# EUROPÄISCHE PATENTSCHRIFT

(11) **EP 3 516 258 B1**
(45) Veröffentlichungstag und Bekanntmachung des Hinweises auf die Patenterteilung: **27.04.2022**
(21) Anmeldenummer: 17800398.4
(22) Anmeldetag: 24.10.2017
(51) Int. Cl.: F16D 65/56, F16D 66/02, G01B 7/06

(54) **SENSORANORDNUNG FÜR EINE BREMSEINHEIT EINES FAHRZEUGS**
SENSOR ARRANGEMENT FOR A BRAKE UNIT OF A VEHICLE
SYSTÈME DE DÉTECTION POUR UNE UNITÉ DE FREINAGE D'UN VÉHICULE

(30) Priorität: 27.10.2016 AT 509822016
(43) Veröffentlichungstag der Anmeldung: 31.07.2019
(73) Patentinhaber: MELECS EWS GmbH, 7011 Siegendorf (AT)
(72) Erfinder: GANAL, Emmanuel, 1140 Wien (AT); NEUMANN, Gerhard, 3231 St. Margarethen (AT); HELLINGER, Leopold, 3710 Ziersdorf (AT); NEUMANN, Philipp, 1200 Wien (AT)
(74) Vertreter: Maier, Daniel Oliver
(86) Internationale Anmeldenummer: PCT/EP2017/077088
(87) Internationale Veröffentlichungsnummer: WO 2018/077837

(56) Entgegenhaltungen:
- EP-A1- 2 708 771
- EP-A1- 2 816 321
- EP-A2- 1 548 408
- US-A- 5 955 881
- US-A1- 2010 207 616
- US-A1- 2011 175 601
- US-A1- 2014 243 750

## Beschreibung

Die Erfindung bezieht sich auf eine Sensoranordnung mit zumindest einem Magnetsensor, zumindest einem Magneten und einem Gehäuse, für eine Bremseinheit eines Fahrzeugs.

Insbesondere bei Reibungsbremsen von Lastkraftwagen sind häufig Sensoren für die Messung von Bremsbelag- und bzw. oder Bremsscheibenverschleiß und zur Bestimmung einer Reststandzeit bzw. Restlaufleistung von Bremsbelägen und bzw. oder Bremsscheiben angeordnet. Dadurch kann auf Sichtkontrollen verzichtet bzw. zumindest deren Anzahl reduziert werden.

Für die Verschleißmessung werden häufig Winkelsensoren auf einer mit einer Bremszange verbundenen Nachstellvorrichtung angeordnet. Die Nachstellvorrichtung bewirkt eine Kompensation von Bremsbelag- und Bremsscheibenverschleiß und stellt die Position von Bremsbelägen gegenüber einer Bremsscheibe derart ein, dass ein definiertes Luftspiel zwischen den Bremsbelägen und der Bremsscheibe eingehalten wird.

Es ist üblich, die Nachstellvorrichtung als Welle bzw. Spindel auszuführen. Eine Rotation dieser Welle wird in eine Translationsbewegung der Bremsbeläge umgewandelt. Ein Beispiel einer Nachstellvorrichtung zeigt die EP 1 776 531 B1.

Über einen Winkelsensor werden Rotationen der Nachstellvorrichtung erfasst und über eine Auswerteeinheit wird ein mit diesen Rotationen in Zusammenhang stehender Zustellweg der Bremsbeläge berechnet. Aus dem Zustellweg der Bremsbeläge wird der Bremsbelagverschleiß ermittelt.

Häufig ist auf der Bremszange ein Getriebe angeordnet, welches die Rotationen der Nachstellvorrichtung untersetzt, damit die mit den Rotationen in Zusammenhang stehenden Winkeländerungen von dem Winkelsensor erfasst werden können.

Aus dem Stand der Technik ist die WO 2013/144037 A1 bekannt. Darin werden eine Scheibenbremse mit einem mechanischen Verschleißnachsteller sowie eine Sensoreinrichtung und ein Verfahren zur Bestimmung eines Verschleißes und eines Betätigungshubs der Scheibenbremse beschrieben. Die Sensoreinrichtung umfasst ein Überlagerungsgetriebe mit einer Mitnehmerwelle, die über ein Synchronmittel mit einer Nachstellerwelle gekoppelt ist. Drehwinkel der Mitnehmerwelle korrelieren aufgrund des Synchronmittels mit Drehwinkeln der Nachstellerwelle. Die Sensoreinrichtung weist ein Potentiometer auf, mit dem Drehwinkel der Mitnehmerwelle erfasst werden, aus denen in einer Auswerteeinheit Verschleißwerte ermittelt werden.

Weiterhin zeigt die EP 2 598 767 B1 einen Bremsverschleißsensor mit einer Sensoreinheit, die mit einem Planetengetriebe zusammenwirkt. Verschleißwerte werden aus über das Planetengetriebe übertragenen Drehwinkelinformationen mittels Potentiometer bestimmt.

Dokument US2011/175601 A1 offenbart eine Sensoranordnung zur Bestimmung der Winkelposition eines Objekts.

Die genannten Ansätze weisen in ihren bekannten Formen den Nachteil auf, dass die Sensoreinrichtungen Getriebe aufweisen und für eine Verschleißbestimmung über die Getriebe übertragene Drehwinkel erfasst werden, wodurch sich eine hohe konstruktive Komplexität ergibt.

Der Erfindung liegt daher die Aufgabe zugrunde, eine gegenüber dem Stand der Technik verbesserte Sensoranordnung anzugeben.

Erfindungsgemäß wird diese Aufgabe gelöst mit einer Sensoranordnung nach Anspruch 1.

Durch die spezielle Anordnung des Magnetsensors, des Magneten, der Welle und des Halters in dem Gehäuse sowie aufgrund der Transformation von Rotationsbewegungen der Welle in Translationsbewegungen des Magneten gegenüber dem Magnetsensor ergibt sich eine besonders kompakte und günstige Ausführung: Wird die Sensoranordnung für eine Bremsbelag-Verschleißermittlung eingesetzt, so korrelieren diese Translationsbewegungen mit Bewegungen einer Verschleiß-Nachstellvorrichtung der Bremseinheit. Auf ein Getriebe zwischen der Nachstellvorrichtung und der Sensoranordnung kann verzichtet werden.

Aus den von dem Magnetsensor erfassten Translationsbewegungen kann unmittelbar ein Verschleißwert ermittelt werden. Es ist keine Umrechnung einer Winkeländerung, die beispielsweise von einer aus dem Stand der Technik bekannten Sensoranordnung mit einem Winkelsensor erfasst wird, in einen Verschleißwert erforderlich.

Weiterhin wird durch Anordnung der Komponenten in dem Gehäuse eine vorteilhafte Kapselung der Sensoranordnung bewirkt. Der Magnetsensor und der Magnet sind vor Umgebungseinflüssen (z.B. Partikel, Feuchtigkeit etc.) geschützt.

Eine günstige Lösung ergibt sich, wenn der zumindest eine Magnet in einem Teilchenverbundwerkstoff mit Dauermagnetpulver und Kunststoffbinder ausgeführt ist.

Durch diese Maßnahme kann auf eine Montage eines Magneten nach der Fertigung des Halters verzichtet werden. Der Magnet wird unmittelbar während des Fertigungsvorgangs des Halters in diesen eingearbeitet.

Eine vorteilhafte Ausgestaltung erhält man, wenn die Welle, der Halter und das Gehäuse in Kunststoff ausgeführt sind. Durch diese Maßnahme ergibt sich ein Gewichtsvorteil.

Es ist günstig, wenn die Welle als Hohlwelle ausgeführt ist. Durch diese Maßnahme ergibt sich der Vorteil, dass ein Werkzeug in die Welle eingeführt werden kann, um damit beispielsweise eine unter der Welle angeordnete Nachstellvorrichtung zu warten.

Eine vorteilhafte Ausgestaltung ergibt sich, wenn der zumindest eine Magnetsensor auf einer als Stecker ausgeführten Leiterplatte angeordnet ist.

Durch diese Maßnahme wird eine besonders kompakte Anordnung erzielt.

Über eine Gehäuseöffnung wird auf die Leiterplatte ein Steckverbinder gesteckt, der einerseits das Gehäuse gegenüber seiner Umgebung verschließt und abdichtet sowie andererseits eine Verbindung zwischen dem Magnetsensor und einer Auswerteeinheit ermöglicht. Auf Kabel zwischen dem Magnetsensor und dem Steckverbinder kann dadurch verzichtet werden.

Eine günstige Lösung erhält man, wenn der Steckverbinder über eine Auswerteeinheit mit einer Anzeigeeinheit verbunden ist. Dadurch ergibt sich der Vorteil, dass einem Fahrer von dem Magnetsensor erfasste und von der Auswerteeinheit verarbeitete Systemzustände (z.B. ein maximaler Bremsenverschleiß) angezeigt werden können.

Eine vorteilhafte Ausgestaltung erhält man, wenn auf dem Gehäuse eine Schutzkappe aufgesteckt ist.

Durch die Anordnung einer aufsteckbaren Schutzkappe ergibt sich der Vorteil, dass kein beispielsweise mit dem Gehäuse verschraubter Gehäusedeckel vorgesehen sein muss. Die Schutzkappe kann rasch montiert und demontiert werden, wodurch der Aufwand für Sichtkontrollen und Wartungsvorgänge reduziert wird.

Weiterhin ist dadurch die Welle gegen Umgebungseinflüsse (z.B. Partikel, Feuchtigkeit etc.) geschützt.

Es ist günstig, wenn das Gehäuse zumindest einen ersten Gehäuseteil und einen zweiten Gehäuseteil umfasst, die durch einen Schnappverschluss miteinander verbunden sind.

Durch den Schnappverschluss wird eine einfache und rasche Montier- und Demontierbarkeit des Gehäuses erzielt. Es sind keine zusätzlichen Befestigungsmittel (z.B. Schrauben) erforderlich, wodurch sich die Zahl der Komponenten der Sensoranordnung verringert und ein Kostenvorteil bewirkt wird.

Nachfolgend wird die Erfindung anhand von Ausführungsbeispielen näher erläutert.

Es zeigen beispielhaft:
- Fig. 1:: Einen Schrägriss einer erfindungsgemäßen Sensoranordnung mit einem Magnetsensor, einem Magneten, einer Welle und einem Gehäuse in Explosionsdarstellung,
- Fig. 2:: Einen Schnitt durch die Längsachse einer Welle einer erfindungsgemäßen Sensoranordnung in gefügter Darstellung,
- Fig. 3:: Einen Schnitt durch die Längsachse eines Magneten einer erfindungsgemäßen Sensoranordnung in gefügter Darstellung,
- Fig. 4:: Einen Schrägriss einer erfindungsgemäßen Sensoranordnung in gefügter Darstellung, und
- Fig. 5:: Einen Schrägriss eines Steckverbinders einer erfindungsgemäßen Sensoranordnung.

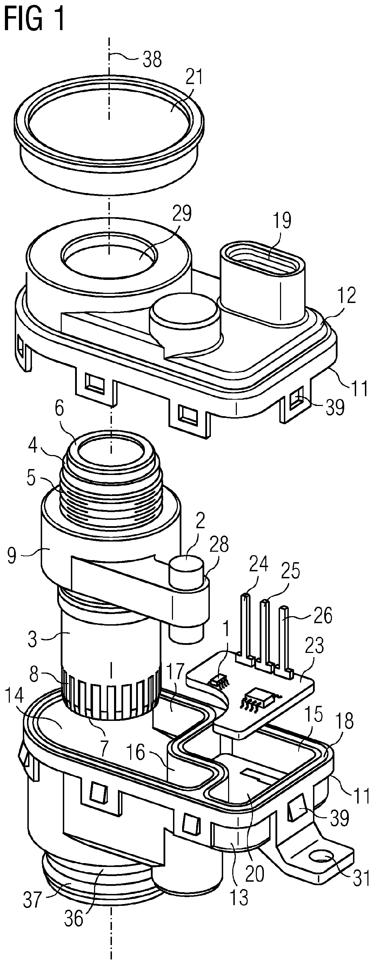

Fig. 1 zeigt eine beispielhafte Ausführungsvariante einer erfindungsgemäßen Sensoranordnung in Explosionsdarstellung. Die Sensoranordnung umfasst einen Magnetsensor 1, der als 3D-Sensor ausgebildet und auf einer Leiterplatte 23 angeordnet ist sowie einen über eine erste Bohrung 28 in einem Halter 9 angeordneten, zylindrischen Magneten 2.

Bei der Anordnung des Magneten 2 in der ersten Bohrung 28 handelt es sich um eine günstige Lösung. Erfindungsgemäß ist es jedoch auch vorstellbar, dass der Magnet 2 in einem Teilchenverbundwerkstoff ausgeführt und in den Halter 9 eingearbeitet ist.

Weiterhin ist es erfindungsgemäß auch möglich, dass der Magnetsensor 1 als Linearsensor ausgebildet ist.

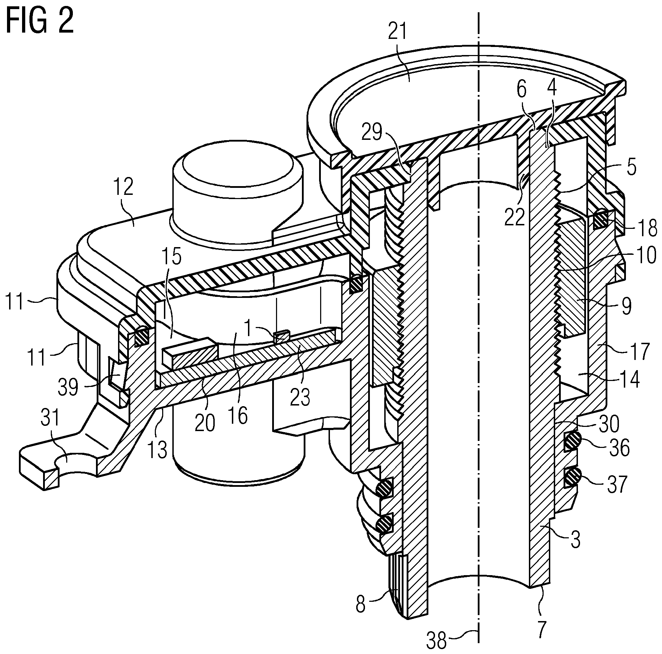

Zusammen mit einer Welle 3, die als Hohlwelle ausgeführt ist, ist die Sensoranordnung in einem Gehäuse 11 angeordnet, wobei dieser Montagezustand in Fig. 2 bis Fig. 4 dargestellt ist. Der Halter 9 weist einen zylindrischen Abschnitt mit kreisringförmiger Grundfläche sowie einen prismatischen Abschnitt, dessen freies Ende halbzylindrisch gerundet ist, mit der ersten Bohrung 28 auf. Über ein auf einer Innenmantelfläche des zylindrischen Abschnitts des Halters 9 ausgebildetes Innengewinde 10 und ein auf einer Außenmantelfläche der Welle 3 ausgeführtes Außengewinde 5 ist der Halter 9 mit der Welle 3 verbunden. Das Innengewinde 10 wird in Fig. 2 gezeigt.

Die Welle 3 weist in einem in Fig. 1 unten dargestellten Bereich ein Keilprofil 8 auf.

Das Gehäuse 11 ist aus einem Kunststoff PA 66 GF 30 ausgeführt und umfasst einen in Fig. 1 oben gezeigten ersten Gehäuseteil 12 und einen unten dargestellten zweiten Gehäuseteil 13.

Der erste Gehäuseteil 12 weist einen zylindrischen Bereich auf, in dem eine zweite Bohrung 29 zur Aufnahme der Welle 3 ausgebildet ist.

Auf den zylindrischen Bereich ist eine zylindrische Schutzkappe 21 gesteckt. Dieser Montagezustand wird in Fig. 2, Fig. 3 und Fig. 4 gezeigt.

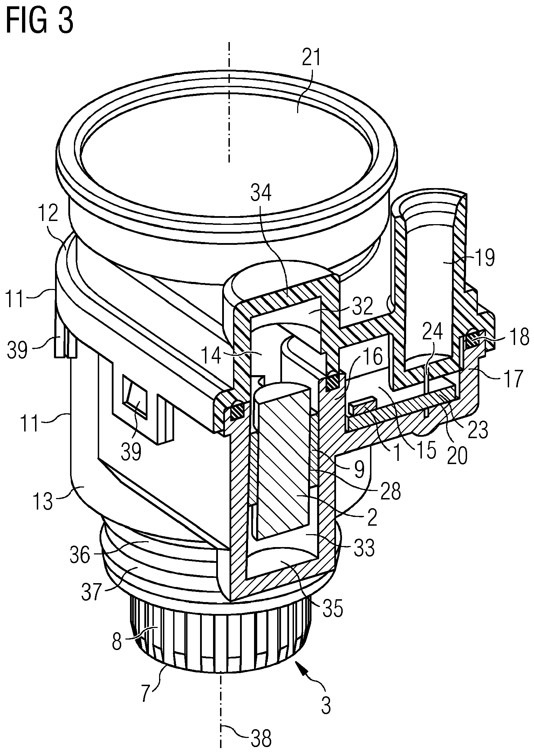

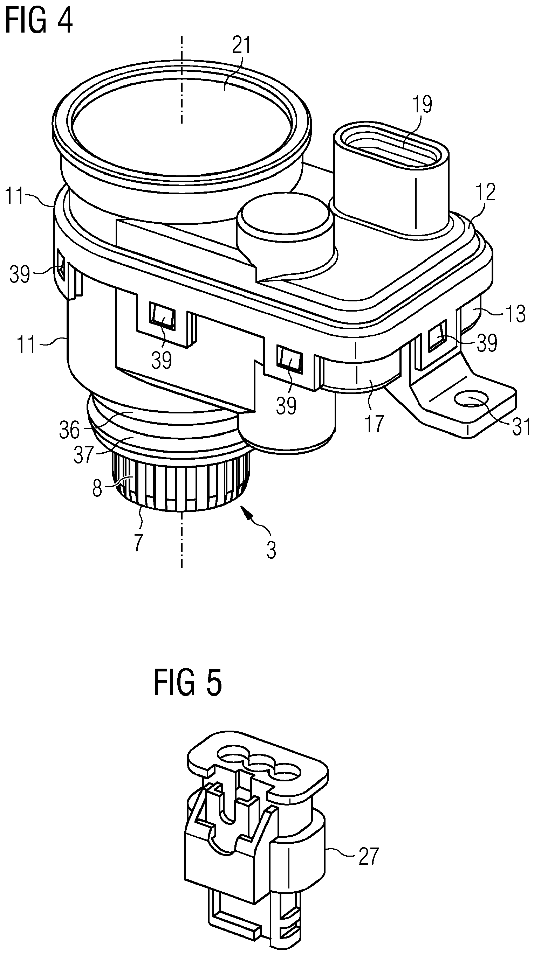

Weiterhin ist auf dem ersten Gehäuseteil 12 eine Gehäuseöffnung 19 ausgeführt, in die ein in Fig. 5 dargestellter Steckverbinder 27 eingeführt wird. Ferner weist der erste Gehäuseteil 12 eine in Fig. 3 dargestellte zylindrische erste Gehäuseausnehmung 32 auf.

Auf dem ersten Gehäuseteil 12 sind weiterhin gelochte Laschen eines Schnappverschlusses 39 zur Verbindung des ersten Gehäuseteils 12 mit dem zweiten Gehäuseteil 13 angeordnet. Bei der Anordnung des Schnappverschlusses 39 handelt es sich um eine günstige Lösung. Erfindungsgemäß ist es jedoch auch vorstellbar, den ersten Gehäuseteil 12 mit dem zweiten Gehäuseteil 13 beispielsweise zu verschweißen.

Der zweite Gehäuseteil 13 weist auf einer Querschnittsfläche eine entlang einer Gehäuseaußenwand 17 und einer Gehäuseinnenwand 16 angeordnete Gehäusedichtung 18 auf. Die Gehäuseinnenwand 16 trennt einen ersten Gehäuseinnenraum 14 von einem zweiten Gehäuseinnenraum 15. Der erste Gehäuseinnenraum 14 und der zweite Gehäuseinnenraum 15 sind L-förmig ausgeführt.

Die Gehäuseinnenwand 16 und die Gehäuseaußenwand 17 sind in einer Weise als Schacht ausgebildet, dass sie den prismatischen Abschnitt des Halters 9 teilweise spielfrei ummanteln. Dadurch ist der Halter 9 gegen Verdrehungen relativ zu dem Gehäuse 11 gesichert.

Auf eine Bodenfläche 20 des zweiten Gehäuseinnenraums 15 ist die Leiterplatte 23 gesetzt. Dieser Montagezustand wird in Fig. 2 und Fig. 3 gezeigt.

Die Leiterplatte 23 weist den Magnetsensor 1 und einen ersten Kontaktstift 24, einen zweiten Kontaktstift 25 sowie einen dritten Kontaktstift 26 auf. Der erste Kontaktstift 24 der zweite Kontaktstift 25 und der dritte Kontaktstift 26 sind aus einem metallischen Werkstoff CuSn4 ausgeführt, senkrecht zu der Leiterplatte 23 angeordnet und mit dem in Fig. 5 gezeigten Steckverbinder 27 verbunden.

Weiterhin sind in einem in Fig. 1 unten gezeigten Bereich auf dem zweiten Gehäuseteil 13 ein erster O-Ring 36 und ein zweiter O-Ring 37 angeordnet.

Eine L-förmige Lasche mit einer in Fig. 1 waagrecht ausgerichteten vierten Bohrung 31 ist im Bereich des zweiten Gehäuseinnenraums 15 mit der Gehäuseaußenwand 17 verbunden. Über die vierte Bohrung 31 ist das Gehäuse 11 mit einer nicht gezeigten Bremszange verbunden.

Ferner sind auf dem zweiten Gehäuseteil 13 Gegenstücke zu den auf dem ersten Gehäuseteil 12 angeordneten gelochten Laschen des Schnappverschlusses 39 vorgesehen, in welche die gelochten Laschen eingerastet sind. Ein derartiger Montagezustand wird in Fig. 2, Fig. 3 und Fig. 4 gezeigt.

Zur Montage der Sensoranordnung wird der Halter 9 über sein Innengewinde 10 auf das Außengewinde 5 der Welle 3 aufgeschraubt. Die Welle 3 wird mit dem Halter 9 und dem Magneten 2 in einer Weise in den ersten Gehäuseinnenraum 14 des zweiten Gehäuseteils 13 eingeführt, dass die Gehäuseinnenwand 16 und die Gehäuseaußenwand 17 den Halter 9 teilweise ummanteln.

Die Leiterplatte 23 wird mit dem Magnetsensor 1 in den zweiten Gehäuseinnenraum 15 des zweiten Gehäuseteils 13 eingesetzt.

Über die zweite Bohrung 29 des ersten Gehäuseteils 12 wird dieses über die Welle 3 geführt und auf diese gesetzt.

Der erste Gehäuseteil 12 wird mit dem zweiten Gehäuseteil 13 über den Schnappverschluss 39 verriegelt, der in Fig. 5 gezeigte Steckverbinder 27 über die Gehäuseöffnung 19 auf die Leiterplatte 23 gesteckt und die Schutzkappe 21 wird in einer Weise auf den ersten Gehäuseteil 12 gesetzt, dass sie eine in Fig. 1 oben gezeigte erste Stirnseite 6 der Welle 3 abdeckt. Fig. 2, Fig. 3 und Fig. 4 zeigen einen montierten Zustand der Sensoranordnung.

Fig. 2 zeigt einen gefügten Montagezustand der erfindungsgemäßen Sensoranordnung mit einem Gehäuse 11, wobei diese durch eine Längsachse 38 geschnitten dargestellt ist. Eine Schutzkappe 21 berührt über ihre innere Mantelfläche eine äußere Mantelfläche eines ersten Gehäuseteils 12. Ein zylindrischer Innenteil 22 der Schutzkappe 21 berührt über seine äußere Mantelfläche eine innere Mantelfläche einer als Hohlwelle ausgeführten Welle 3. Die Schutzkappe 21 deckt die Welle 3 im Bereich einer ersten Stirnseite 6 ab.

Der erste Gehäuseteil 12 ist auf eine Schulter 4 der Welle 3 aufgesetzt und über einen Schnappverschluss 39 mit einem zweiten Gehäuseteil 13 verbunden.

Über ein Außengewinde 5 der Welle 3 und ein Innengewinde 10 eines Halters 9 sind die Welle 3 und der Halter 9 miteinander verbunden.

Über die Schulter 4 in einem in Fig. 2 über dem Außengewinde 5 dargestellten Bereich und darüber hinaus in einem Bereich unter dem Außengewinde 5 ist die Welle 3 in dem Gehäuse 11 gelagert und gegen Translationsbewegungen gegenüber dem Gehäuse 11 gesichert.

Die Welle 3 ist in einem ersten Gehäuseinnenraum 14 angeordnet. Der Halter 9 wird von einer Gehäuseaußenwand 17 und einer Gehäuseinnenwand 16 teilweise ummantelt und ist dadurch gegen Verdrehungen relativ zu dem Gehäuse 11 gesichert.

Die Welle 3 ragt mit ihrer zweiten Stirnseite 7 in einem in Fig. 2 unten dargestellten Bereich über eine dritte Bohrung 30 aus dem Gehäuse 11.

In einem zweiten Gehäuseinnenraum 15 ist eine Leiterplatte 23 angeordnet. Ihre Seitenflächen berühren die Gehäuseinnenwand 16 und die Gehäuseaußenwand 17.

Fig. 2 zeigt jene Ausführung der Sensoranordnung, die auch in Fig. 1 dargestellt ist. Dementsprechend werden auch die gleichen Bezugszeichen wie in Fig. 1 verwendet.

Fig. 3 zeigt einen Schnitt durch die Längsachse eines Magneten 2 einer erfindungsgemäßen Sensoranordnung in gefügter Darstellung. Der Magnet 2 ist über einen Halter 9 mit einer als Hohlwelle ausgeführten Welle 3 verbunden und in einem ersten Gehäuseinnenraum 14 eines Gehäuses 11 angeordnet. Die Welle 3 ist über ein Keilprofil 8 mit einer nicht gezeigten, aus dem Stand der Technik bekannten Nachstellvorrichtung einer Bremseinheit gekoppelt. Es können dadurch von der Nachstellvorrichtung Bewegungen auf die Welle 3 übertragen werden, wodurch die Welle 3 Rotationsbewegungen gegenüber dem Gehäuse 11 ausführt.

Diese Rotationsbewegungen werden aufgrund der in Fig. 1 und Fig. 2 gezeigten Verbindung des Halters 9 mit der Welle 3 über ein Innengewinde 10 und ein Außengewinde 5 in Translationsbewegungen des Halters 9 mit dem Magneten 2 gegenüber einem Magnetsensor 1 in Richtung einer Längsachse 38 umgewandelt.

Die Translationsbewegungen korrelieren mit Zustellbewegungen von nicht gezeigten Bremsbelägen an eine ebenfalls nicht gezeigte Bremsscheibe zur Kompensation von Bremsenverschleiß bzw. zur Einhaltung eines definierten Luftspiels zwischen den Bremsbelägen und der Bremsscheibe.

Die Relativbewegung des Halters 9 gegenüber dem Magnetsensor 1 kann demnach mit einem Verschleißwert in Verbindung gebracht werden.

Die Beweglichkeit des Magneten 2 wird durch einen ersten Anschlag 34 einer in Fig. 3 oben dargestellten, zylindrischen ersten Gehäuseausnehmung 32 und durch einen zweiten Anschlag 35 einer in Fig. 3 unten gezeigten, zylindrischen zweiten Gehäuseausnehmung 33 begrenzt.

In einem zweiten Gehäuseinnenraum 15 ist auf einer Leiterplatte 23 der Magnetsensor 1 angeordnet. Der Magnetsensor 1 ist als aus dem Stand der Technik bekannter Hall-Sensor ausgeführt.

Erreicht der Magnet 2 bei seiner Translationsbewegung einen definierten Abstand zu dem Magnetsensor 1, der einem maximalen Verschleißwert der Bremsbeläge und bzw. oder der Bremsscheibe entspricht, wird in dem Magnetsensor 1, der über einen in Fig. 5 gezeigten Steckverbinder 27 mit Strom versorgt wird, eine Ausgangsspannung gebildet, die proportional zu einem Produkt aus einer magnetischen Flussdichte und dem Strom ist. Diese Ausgangsspannung wird als Spannungssignal über den Steckverbinder 27 in eine nicht dargestellte Auswerteeinheit übertragen und verarbeitet. Über nicht dargestellte Leitungswege ist die Auswerteeinheit mit einer ebenfalls nicht gezeigten Anzeigeeinheit in einem Cockpit eines Fahrzeugs verbunden. Über die Anzeigeeinheit wird der Zustand eines maximalen Bremsenverschleißes einem Fahrer angezeigt.

Erfindungsgemäß ist es auch vorstellbar, dass einem Fahrer nicht nur ein maximaler Bremsenverschleißwert angezeigt wird, sondern auch Verschleiß-Momentanwerte gemessen und angezeigt werden.

Über eine Gehäuseöffnung 19 wird der Steckverbinder 27 über einen ersten Kontaktstift 24 sowie, in Fig. 3 nicht sichtbar, einen zweiten Kontaktstift 25 und einen dritten Kontaktstift 26 auf die Leiterplatte 23 gesteckt. Über den Steckverbinder 27 werden die Leiterplatte 23 und der Magnetsensor 1 mit Strom versorgt und Spannungssignale des Magnetsensors 1 an die mit dem Steckverbinder 27 verbundene Auswerteeinheit geleitet. Der Steckverbinder 27 verschließt die Gehäuseöffnung 19 bzw. dichtet diese gegen Umgebungseinflüsse (z.B. Feuchtigkeit, Partikel etc.) ab.

Fig. 3 zeigt jene Ausführung der Sensoranordnung, die auch in Fig. 1 und Fig. 2 dargestellt ist. Dementsprechend werden auch die gleichen Bezugszeichen wie in Fig. 1 und Fig. 2 verwendet.

Fig. 4 zeigt einen Schrägriss einer erfindungsgemäßen Sensoranordnung in gefügter Darstellung. Über eine vierte Bohrung 31 in einer Lasche eines Gehäuses 11 ist die Sensoranordnung mit einer nicht dargestellten Bremszange verbunden.

Das Gehäuse 11 umfasst einen ersten Gehäuseteil 12 und einen zweiten Gehäuseteil 13, die über einen Schnappverschluss 39 miteinander verbunden sind.

Fig. 4 zeigt jene Ausführung der Sensoranordnung, die auch in Fig. 1, Fig. 2 und Fig. 3 dargestellt ist. Dementsprechend werden auch die gleichen Bezugszeichen wie in Fig. 1, Fig. 2 und Fig. 3 verwendet.

In Fig. 5 ist ein Steckverbinder 27 für eine erfindungsgemäße Sensoranordnung dargestellt, der über eine in Fig. 1, Fig. 3 und Fig. 4 gezeigte Gehäuseöffnung 19 auf eine Leiterplatte 23 gesteckt wird und die Gehäuseöffnung 19 verschließt.

Der Steckverbinder 27 ist mit Kunststoff ummantelt und weist drei Kontakte zur Verbindung mit einem ersten Kontaktstift 24, einem zweiten Kontaktstift 25 und einem dritten Kontaktstift 26 der Leiterplatte 23, die in Fig. 1 dargestellt sind, auf.

### Liste der Bezeichnungen

- 1: Magnetsensor
- 2: Magnet
- 3: Welle
- 4: Schulter
- 5: Außengewinde
- 6: Erste Stirnseite
- 7: Zweite Stirnseite
- 8: Keilprofil
- 9: Halter
- 10: Innengewinde
- 11: Gehäuse
- 12: Erster Gehäuseteil
- 13: Zweiter Gehäuseteil
- 14: Erster Gehäuseinnenraum
- 15: Zweiter Gehäuseinnenraum
- 16: Gehäuseinnenwand
- 17: Gehäuseaußenwand
- 18: Gehäusedichtung
- 19: Gehäuseöffnung
- 20: Bodenfläche
- 21: Schutzkappe
- 22: Innenteil
- 23: Leiterplatte
- 24: Erster Kontaktstift
- 25: Zweiter Kontaktstift
- 26: Dritter Kontaktstift
- 27: Steckverbinder
- 28: Erste Bohrung
- 29: Zweite Bohrung
- 30: Dritte Bohrung
- 31: Vierte Bohrung
- 32: Erste Gehäuseausnehmung
- 33: Zweite Gehäuseausnehmung
- 34: Erster Anschlag
- 35: Zweiter Anschlag
- 36: Erster O-Ring
- 37: Zweiter O-Ring
- 38: Längsachse
- 39: Schnappverschluss

## Patentansprüche

1. Sensoranordnung mit zumindest einem Magnetsensor (1), zumindest einem Magneten (2) und einem Gehäuse (11), für eine Bremseinheit eines Fahrzeugs, wobei eine Welle (3) in dem Gehäuse (11) und gegenüber einem Halter (9), auf dem der zumindest eine Magnet (2) angeordnet ist, in einer Weise drehbar gelagert ist und der Halter (9) sowie der zumindest eine Magnetsensor (1) in und relativ zu dem Gehäuse (11) gegen Verdrehung gesichert in einer Weise gelagert sind, dass bei Rotationsbewegungen der Welle (3) der zumindest eine Magnet (2) Translationsbewegungen gegenüber dem zumindest einen Magnetsensor (1) ausführt, **dadurch gekennzeichnet, dass** die Welle (3) mit dem Halter (9) und dem zumindest einen Magneten (2) in einen L-förmig ausgeführten ersten Gehäuseinnenraum (14) eingeführt ist und eine Gehäuseinnenwand (16) den Halter (9) zumindest teilweise ummantelt.

2. Sensoranordnung nach Anspruch 1, **dadurch gekennzeichnet, dass** der zumindest eine Magnet (2) in einem Teilchenverbundwerkstoff mit Dauermagnetpulver und Kunststoffbinder ausgeführt ist.

3. Sensoranordnung nach Anspruch 1 oder 2, **dadurch gekennzeichnet, dass** die Welle (3), der Halter (9) und das Gehäuse (11) in Kunststoff ausgeführt sind.

4. Sensoranordnung nach einem der Ansprüche 1, 2 oder 3, **dadurch gekennzeichnet, dass** die Welle (3) als Hohlwelle ausgeführt ist.

5. Sensoranordnung nach einem der Ansprüche 1, 2, 3 oder 4, **dadurch gekennzeichnet, dass** der zumindest eine Magnetsensor (1) als 3D-Sensor ausgeführt ist.

6. Sensoranordnung nach einem der Ansprüche 1, 2, 3 oder 4, **dadurch gekennzeichnet, dass** der zumindest eine Magnetsensor (1) als Linearsensor ausgeführt ist.

7. Sensoranordnung nach Anspruch 6, **dadurch gekennzeichnet, dass** der zumindest eine Magnetsensor (1) als Schalter ausgeführt ist.

8. Sensoranordnung nach Anspruch 6, **dadurch gekennzeichnet, dass** der zumindest eine Magnetsensor (1) als Positionssensor ausgeführt ist.

9. Sensoranordnung nach einem der Ansprüche 1, 2, 3, 4, 5, 6, 7 oder 8, **dadurch gekennzeichnet, dass** der zumindest eine Magnetsensor (1) auf einer als Stecker ausgeführten Leiterplatte (23) angeordnet ist.

10. Sensoranordnung nach Anspruch 9, **dadurch gekennzeichnet, dass** mit der Leiterplatte (23) ein Steckverbinder (27), der in dem Gehäuse (11) und dieses verschließend angeordnet ist, verbunden ist.

11. Sensoranordnung nach Anspruch 10, **dadurch gekennzeichnet, dass** der Steckverbinder (27) über eine Auswerteeinheit mit einer Anzeigeeinheit verbunden ist.

12. Sensoranordnung nach einem der Ansprüche 1, 2, 3, 4, 5, 6, 7, 8, 9, 10 oder 11, **dadurch gekennzeichnet, dass** auf dem Gehäuse (11) eine Schutzkappe (21) aufgesteckt ist.

13. Sensoranordnung nach einem der Ansprüche 1, 2, 3, 4, 5, 6, 7, 8, 9, 10, 11 oder 12, **dadurch gekennzeichnet, dass** das Gehäuse (11) zumindest einen ersten Gehäuseteil (12) und einen zweiten Gehäuseteil (13) umfasst, die durch einen Schnappverschluss (39) miteinander verbunden sind.

14. Sensoranordnung nach einem der Ansprüche 1, 2, 3, 4, 5, 6, 7, 8, 9, 10, 11, 12 oder 13, **dadurch gekennzeichnet, dass** der zumindest eine Magnetsensor (1) für Verschleißmessungen an Bremsbelägen und Bremsscheiben eingerichtet ist.

15. Verfahren für die Montage einer Sensoranordnung nach Anspruch 13 oder 14, **dadurch gekennzeichnet,**
**dass** der Halter (9) über sein Innengewinde (10) auf ein Außengewinde (5) der Welle (3) aufgeschraubt wird,
**dass** die Welle (3) mit dem Halter (9) und dem zumindest einen Magneten (2) in einer Weise in den ersten Gehäuseinnenraum (14) des zweiten Gehäuseteils (13) eingeführt wird, dass die Gehäuseinnenwand (16) den Halter (9) zumindest teilweise ummantelt,
**dass** die Leiterplatte (23) mit dem zumindest einen Magnetsensor (1) in einen zweiten Gehäuseinnenraum (15) des zweiten Gehäuseteils (13) eingesetzt wird,
**dass** über eine zweite Bohrung (29) des zumindest ersten Gehäuseteils (12) dieses über die Welle (3) geführt und auf diese gesetzt wird,
**dass** der zumindest erste Gehäuseteil (12) mit dem zweiten Gehäuseteil (13) über den Schnappverschluss (39) verriegelt wird,
**dass** der Steckverbinder (27) über eine Gehäuseöffnung (19) auf die Leiterplatte (23) gesteckt wird, und
**dass** die Schutzkappe (21) in einer Weise auf den zumindest ersten Gehäuseteil (12) gesetzt wird, dass sie eine erste Stirnseite (6) der Welle (3) abdeckt.

## Claims

1. Sensor arrangement with at least one magnetic sensor (1), at least one magnet (2) and a housing (11), for a braking unit of a vehicle, wherein
a shaft (3) is rotatably mounted in the housing (11) and in relation to a holder (9), on which the at least one magnet (2) is arranged, in such a manner and the holder (9) as well as the at least one magnetic sensor (1) are mounted, secured against twisting in and relative to the housing (11), in such a manner that in the event of rotational movements of the shaft (3), the at least one magnet (2) carries out translational movements in relation to the at least one magnetic sensor (1), **characterised in that** the shaft (3) is introduced with the holder (9) and the at least one magnet (2) into a first housing interior (14) designed in an L-shaped manner and a housing inner wall (16) at least partially encapsulates the holder (9).

2. Sensor arrangement according to claim 1, **characterised in that** the at least one magnet (2) is made of a particulate composite material with permanent magnet powder and plastic binder.

3. Sensor arrangement according to claim 1 or 2, **characterised in that** the shaft (3), the holder (9) and the housing (11) are made of plastic.

4. Sensor arrangement according to one of claims 1, 2 or 3, **characterised in that** the shaft (3) is designed as a hollow shaft.

5. Sensor arrangement according to one of claims 1, 2, 3 or 4, **characterised in that** the at least one magnetic sensor (1) is designed as a 3D sensor.

6. Sensor arrangement according to one of claims 1, 2, 3 or 4, **characterised in that** the at least one magnetic sensor (1) is designed as a linear sensor.

7. Sensor arrangement according to claim 6, **characterised in that** the at least one magnetic sensor (1) is designed as a switch.

8. Sensor arrangement according to claim 6, **characterised in that** the at least one magnetic sensor (1) is designed as a position sensor.

9. Sensor arrangement according to one of claims 1, 2, 3, 4, 5, 6, 7 or 8, **characterised in that** the at least one magnetic sensor (1) is arranged on a circuit board (23) designed as a plug.

10. Sensor arrangement according to claim 9, **characterised in that** a plug connector (27), which is arranged in the housing (11) and closes it off, is connected to the circuit board (23) .

11. Sensor arrangement according to claim 10, **characterised in that** the plug connector (27) is connected to a display unit via an evaluation unit.

12. Sensor arrangement according to one of claims 1, 2, 3, 4, 5, 6, 7, 8, 9, 10 or 11, **characterised in that** a protective cover (21) is placed on the housing (11).

13. Sensor arrangement according to one of claims 1, 2, 3, 4, 5, 6, 7, 8, 9, 10, 11 or 12, **characterised in that** the housing (11) comprises at least a first housing part (12) and a second housing part (13), which are interconnected by way of a snap closure (39).

14. Sensor arrangement according to one of claims 1, 2, 3, 4, 5, 6, 7, 8, 9, 10, 11, 12 or 13, **characterised in that** the at least one magnetic sensor (1) is configured for wear measurements at brake pads and brake discs.

15. Method for the assembly of a sensor arrangement according to claim 13 or 14, **characterised in that**
the holder (9) is screwed onto an external thread (5) of the shaft (3) via its internal thread (10),
the shaft (3) is introduced with the holder (9) and the at least one magnet (2) into the first housing interior (14) of the second housing part (13) in such a manner that the housing inner wall (16) at least partially encapsulates the holder (9),
the circuit board (23) with the at least one magnetic sensor (1) is inserted into a second housing interior (15) of the second housing part (13),
via a second bore hole (29) of the at least first housing part (12), said housing part (12) is guided via the shaft (3) and onto said shaft (3),
the at least first housing part (12) is interlocked with the second housing part (13) via the snap closure (39),
the plug connector (27) is plugged onto the circuit board (23) via a housing opening (19), and
the protective cover (21) is placed onto the at least one first housing part (12) in such a manner that it covers a first end face (6) of the shaft (3).

## Revendications

1. Système de détection comprenant au moins un capteur magnétique (1), au moins un aimant (2) et un boîtier (11), pour un dispositif de freinage d'un véhicule, dans lequel un arbre (3) est monté de façon à pouvoir tourner dans le boîtier (11) et par rapport à un support (9), sur lequel l'au moins un aimant (2) est disposé et le support (9) ainsi que l'au moins un capteur magnétique (1) sont montés de façon à être bloqués contre toute rotation dans et par rapport au boîtier (11), de telle manière que lors de mouvements de rotation de l'arbre (3), l'au moins un aimant (2) effectue des mouvements de translation par rapport à l'au moins un capteur magnétique (1),
**caractérisé en ce que** l'arbre (3) est introduit avec le support (9) et l'au moins un aimant (2) dans une première cavité intérieure de boîtier (14) réalisée en forme de L et une paroi intérieure de boîtier (16) enveloppe le support (9) au moins en partie.

2. Système de détection selon la revendication 1, **caractérisé en ce que** l'au moins un aimant (2) est réalisé en un matériau composite de particules comprenant de la poudre à aimantation permanente et un liant en matière synthétique.

3. Système de détection selon la revendication 1 ou 2, **caractérisé en ce que** l'arbre (3), le support (9) et le boîtier (11) sont réalisés en matière plastique.

4. Système de détection selon l'une des revendications 1, 2 ou 3, **caractérisé en ce que** l'arbre (3) est réalisé sous forme d'un arbre creux.

5. Système de détection selon l'une des revendications 1, 2, 3 ou 4, **caractérisé en ce que** l'au moins un capteur magnétique (1) est réalisé sous forme d'un capteur 3D.

6. Système de détection selon l'une des revendications 1, 2, 3 ou 4, **caractérisé en ce que** l'au moins un capteur magnétique (1) est réalisé sous forme d'un capteur linéaire.

7. Système de détection selon la revendication 6, **caractérisé en ce que** l'au moins un capteur magnétique (1) est réalisé sous forme d'un commutateur.

8. Système de détection selon la revendication 6, **caractérisé en ce que** l'au moins un capteur magnétique (1) est réalisé sous forme d'un capteur de position.

9. Système de détection selon l'une des revendications 1, 2, 3, 4, 5, 6, 7 ou 8, **caractérisé en ce que** l'au moins un capteur magnétique (1) est disposé sur une carte à circuit imprimé (23) réalisée sous forme d'un connecteur mâle.

10. Système de détection selon la revendication 9, **caractérisé en ce qu'**un connecteur enfichable (27), qui est disposé dans le boîtier (11) de façon à fermer ce dernier, est relié à la carte à circuit imprimé (23).

11. Système de détection selon la revendication 10, **caractérisé en ce que** le connecteur enfichable (27) est connecté à une unité d'affichage par l'intermédiaire d'une unité de traitement.

12. Système de détection selon l'une des revendications 1, 2, 3, 4, 5, 6, 7, 8, 9, 10 ou 11, **caractérisé en ce qu'**une coiffe de protection (21) est enfichée sur le boîtier (11).

13. Système de détection selon l'une des revendications 1, 2, 3, 4, 5, 6, 7, 8, 9, 10, 11 ou 12, **caractérisé en ce que** le boîtier (11) comprend au moins une première partie de boîtier (12) et une deuxième partie de boîtier (13), qui sont reliées l'une à l'autre par une fermeture à encliquetage (39).

14. Système de détection selon l'une des revendications 1, 2, 3, 4, 5, 6, 7, 8, 9, 10, 11, 12 ou 13, **caractérisé en ce que** l'au moins un capteur magnétique (1) est conçu pour des mesures d'usure sur des garnitures de frein et des disques de frein.

15. Procédé de montage d'un système de détection selon la revendication 13 ou 14,
**caractérisé en ce que** :
le support (9) est vissé par son filetage intérieur (10) sur un filetage extérieur (5) de l'arbre (3),
l'arbre (3) avec le support (9) et l'au moins un aimant (2) est introduit dans la première cavité intérieure de boîtier (14) de la deuxième partie de boîtier (13) de telle manière que la paroi intérieure de boîtier (16) enveloppe au moins en partie le support (9),
la carte à circuit imprimé (23) avec l'au moins un capteur magnétique (1) est insérée dans une deuxième cavité intérieure de boîtier (15) de la deuxième partie de boîtier (13),
par un deuxième alésage (29) de l'au moins une première partie de boîtier (12), celle-ci est guidée sur l'arbre (3) et est placée sur ce dernier,
l'au moins une première partie de boîtier (12) est verrouillée avec la deuxième partie de boîtier (13) par l'intermédiaire de la fermeture à encliquetage (39),
le connecteur enfichable (27) est enfiché sur la carte à circuit imprimé (23) par un orifice de boîtier (19), et
la coiffe de protection (21) est posée sur l'au moins une première partie de boîtier (12) de telle manière qu'elle recouvre une première face frontale (6) de l'arbre (3).
